# EUROPÄISCHE PATENTANMELDUNG

(11) **EP 4 799 756 A1**
(43) Veröffentlichungstag der Anmeldung: **02.09.2026**
(21) Anmeldenummer: 26158978.2
(22) Anmeldetag: 17.02.2026
(51) Int. Cl.: B23Q 1/62, B23B 3/00, B23B 5/00, B23Q 5/28, B23Q 5/34, B23Q 5/40

(54) **DREHMASCHINE**

(30) Priorität: 28.02.2025 DE 102025107708
(71) Anmelder: GDW Werkzeugmaschinen GmbH, 91315 Höchstadt a. d. Aisch (DE)
(72) Erfinder: Ort, Johann Georg, 91413 Neustadt a.d.Aisch (DE)
(74) Vertreter: Dr. Gassner & Partner mbB

(57) **Zusammenfassung**

Die Erfindung betrifft eine Drehmaschine mit einer Hauptspindel und einem ersten Motor zum Antrieb der Hauptspindel, einem Maschinenbett, auf dem ein Hauptschlitten in einer Z-Richtung mittels eines ersten Handrads (1) manuell verfahrbar ist, einem auf dem Hauptschlitten angebrachten Planschlitten, welcher in einer senkrecht zur Z-Richtung verlaufenden X-Richtung mittels eines zweiten Handrads manuell verfahrbar ist, mit einem am Hauptschlitten angebrachten Getriebekasten (2) mit einem zweiten Motor (14) zum wahlweisen Antrieb (i) einer im Getriebekasten (2) drehbar gelagerten ersten Mutter (3), welche im Eingriff mit einer fest mit dem Maschinenbett verbundenen ersten Gewindespindel (3a) ist, oder (ii) einer zweiten Gewindespindel (23), welche im Eingriff mit einer am Planschlitten fest angebrachten zweiten Mutter ist, wobei im Getriebekasten (2) ein elektro-mechanisches Schaltgetriebe vorgesehen ist, welches mit einem Schalthebel (7) derart schaltbar ist, dass wahlweise der Hauptschlitten oder der Planschlitten mittels des zweiten Motors (14) motorisch in eine +Richtung oder in eine entgegengesetzte -Richtung verfahrbar ist.

## Beschreibung

Die Erfindung betrifft eine Drehmaschine nach dem Oberbegriff des Patentanspruchs 1.

Bei der gattungsgemäßen Drehmaschine handelt es sich um eine sogenannte "herkömmliche" Drehmaschine, bei der sowohl der Haupt- als auch der Planschlitten manuell mittels Handrädern verfahrbar sind. Die Handräder sind dabei über eine kinematische Kette mit dem Haupt- und/oder Planschlitten mechanisch gekoppelt. Eine konventionelle Drehmaschine unterfällt der Bauart 1 nach EN ISO 23125:2015-04.

Herkömmliche Drehmaschinen können als Leit- und Zugspindeldrehmaschinen ausgeführt sein. An einem in einer Z-Richtung hin- und her verfahrbaren Hauptschlitten ist ein Schlosskasten angebracht, in dem ein Getriebe aufgenommen ist. Zur Betätigung des Getriebes und/oder zum Schalten eines Antriebs für die Leit- und/oder Zugspindel sind am Schlosskasten mehrere mechanische Schaltelemente vorgesehen. Weit verbreitet ist ein sogenannter "Einhebelschalter", mit dem mittels der Zugspindel ein motorischer Vorschub des Hauptschlittens in -Z/+Z-Richtung oder des auf dem Hauptschlitten aufgenommenen Planschlittens in -X/+X-Richtung geschaltet werden kann. Zum Gewindeschneiden muss in diesem Fall die Leitspindel mittels eines am Schlosskasten angebrachten weiteren Schaltelements mit dem Getriebe gekoppelt werden. In dieser Anmeldung bedeutet "-" eine negative Richtung und "+" eine demgegenüber entgegengesetzte positive Richtung.

Nach dem Stand der Technik sind auch konventionelle Drehmaschinen bekannt, bei denen mittels des Einhebelschalters der Hauptschlitten in +Z-Richtung oder der Planschlitten in +X-Richtung schaltbar ist. Ferner ist mit dem Einhebelschalter ein Umschalten in den Gewindeschneidmodus möglich. Zur Änderung der Bewegungsrichtung des Hauptschlittens in -Z-Richtung oder des Planschlittens in -X-Richtung muss ein am Schlosskasten vorgesehenes weiteres mechanisches Schaltelement betätigt werden. Eine solche Drehmaschine ist beispielsweise von der Anmelderin bekannt und wird z. B. unter der Bezeichnung "GDW Drehmaschine LZ 280" angeboten.

Herkömmliche Drehmaschinen können zusätzlich mit einem sogenannten "Eilgang" ausgestattet sein. Zum Ein- und Ausschalten des Eilgangs ist am Schlosskasten ein weiteres Schaltelement vorgesehen, mit dem ein separater "Eilgang-Motor" ein- oder ausgeschaltet werden kann.

Zum Schalten der motorisch ausgeführten Funktionen oder zum Wechsel auf manuelle Bedienung sind bei konventionellen Drehmaschinen also mehrere Schaltelemente erforderlich. Der Schlosskasten ist relativ kompliziert aufgebaut. Auch das Vorsehen einer Zahnstange sowie einer Leitspindel sowie einer Zugspindel und ggf. eines separaten Eilgang-Motors verursachen Aufwand.

Aufgabe der Erfindung ist es, die Nachteile nach dem Stand der Technik zu beseitigen. Es soll insbesondere eine möglichst einfach handhabbare Drehmaschine angegeben werden. Nach einem weiteren Ziel der Erfindung soll die Drehmaschine mit vermindertem Aufwand herstellbar sein.

Diese Aufgabe wird durch eine Drehmaschine mit den Merkmalen des Patentanspruchs 1 gelöst. Zweckmäßige Ausgestaltungen der Erfindung ergeben sich aus den Merkmalen der abhängigen Patentansprüche.

Nach Maßgabe der Erfindung ist vorgesehen, dass am Hauptschlitten ein Getriebekasten angebracht ist, mit einem zweiten Motor zum wahlweisen Antrieb (i) einer im Getriebekasten drehbar gelagerten ersten Mutter, welche im Eingriff mit einer fest mit dem Maschinenbett verbundenen ersten Gewindespindel ist, oder (ii) einer zweiten Gewindespindel, welche im Eingriff mit einer am Planschlitten fest angebrachten zweiten Mutter ist, wobei im Getriebekasten ein elektro-mechanisches Schaltgetriebe vorgesehen ist, welches mit einem Schalthebel derart schaltbar ist, dass wahlweise der Hauptschlitten oder der Planschlitten mittels eines zweiten Motors motorisch in eine +Richtung oder in eine entgegengesetzte -Richtung verfahrbar ist.

Bei dem ersten Motor kann es sich um einen Asynchronmotor, beim zweiten Motor vorzugsweise um einen Servomotor handeln.

Die vorgeschlagene Drehmaschine ist mit vermindertem Aufwand herstellbar. Statt der bei konventionellen Drehmaschinen vorgesehenen Zahnstange sowie Leitspindel und Zugspindel ist nurmehr lediglich eine feststehende Gewindespindel vorgesehen. Die motorische Bewegung des Haupt- oder Planschlittens erfolgt mit einem im Getriebekasten aufgenommenen zweiten Motor, mit dem wahlweise der Hauptschlitten oder der Planschlitten antreibbar ist. Ein dazu erforderliches Getriebe kann relativ einfach ausgestaltet sein und erfordert weniger Herstellungsaufwand. Da das Getriebe als elektro-mechanisches Schaltgetriebe ausgestaltet ist, kann eine vereinfachte Bedienung realisiert werden. Das Getriebe kann mit einem Schalthebel derart schaltbar sein, dass wahlweise der Hauptschlitten oder der Planschlitten mittels des zweiten Motors motorisch in eine +Richtung oder in eine entgegengesetzte -Richtung verfahrbar sind. Das erleichtert die Handhabung der Drehmaschine.

Nach einer vorteilhaften Ausgestaltung sind im Getriebekasten mehrere elektrische Schaltelemente aufgenommen, welche mit einer mit dem Schalthebel bewegbaren Schaltkulisse und/oder mittels einer im Schalthebel vorgesehenen Schaltstange betätigbar sind. Es können Schaltelemente zum Einschalten des zweiten Motors mit einer vorgegebenen Drehrichtung vorgesehen sein. Durch eine gleichzeitige Betätigung mehrerer der Schaltelemente kann eine Winkelgeschwindigkeit des zweiten Motors auf einen vorgegebenen Wert erhöht werden. Damit können der Hauptschlitten oder der Planschlitten in einem "Eilgang" bewegt werden.

Der Schalthebel ist nach einer vorteilhaften Ausgestaltung an einer um eine Schwenkachse schwenkbaren Schaltglocke angebracht, welche ausschließlich in einer Neutralstellung parallel zur Schwenkachse in zumindest drei Schwenkebenen verstellbar ist. Der Schalthebel kann also zusammen mit der Schaltglocke nach Art einer "Einhebelschaltung" ausgeführt sein. Eine solche Schaltung ist besonders einfach handhabbar. Indem die Schaltglocke parallel zur Schwenkachse in zumindest drei Schwenkebenen verstellbar ist, können mit der vorgeschlagenen Schaltung weitere Funktionen geschaltet werden.

Die Schaltglocke kann in einer ersten Schwenkebene von einer ersten Neutralstellung in eine +Z-Hauptschlitten-Vorschubstellung oder in eine -Z-Hauptschlitten-Vorschubstellung schwenkbar sein. Die erste Mutter bzw. Spindelmutter kann in der +Z-Hauptschlitten-Vorschubstellung über eine erste kinematische Kette mechanisch mit dem zweiten Motor gekoppelt und ein erstes Schaltelement geschaltet sein. Beim Schalten des ersten Schaltelements kann eine erste Steuerung derart aktiviert werden, dass ein Antrieb des zweiten Motors in einer ersten Drehrichtung bewirkt wird. Die erste Drehrichtung entspricht einer +Z-Richtung des Hauptschlittens.

Nach einer weiteren Ausgestaltung kann die erste Mutter in der -Z-Hauptschlitten-Vorschubrichtung über die erste kinematische Kette mechanisch mit dem zweiten Motor gekoppelt und ein zweites Schaltelement geschaltet sein. Beim Schalten des zweiten Schaltelements wird die erste Steuerung derart aktiviert, dass ein Antrieb des zweiten Motors in einer der ersten Drehrichtung entgegengesetzten zweiten Drehrichtung bewirkt wird. Die zweite Drehrichtung entspricht der -Z-Richtung des Hauptschlittens.

Sofern sich der Schalthebel in der Neutralstellung befindet, können ohne Weiteres sowohl der Hauptschlitten als auch der Planschlitten mittels der jeweiligen Handräder mechanisch verfahren werden. Infolgedessen ist die Handhabung der vorgeschlagenen Drehmaschine sehr einfach.

Nach einer weiteren Ausgestaltung kann die Schaltglocke in einer zweiten Schwenkebene von einer zweiten Neutralstellung in eine Hauptschlitten-Gewindeschneidstellung schwenkbar sein. Die erste Mutter kann in der Hauptschlitten-Gewindeschneidstellung über die erste kinematische Kette mechanisch mit dem zweiten Motor gekoppelt sein und es kann ein drittes Schaltelement geschaltet sein, so dass eine zweite Steuerung aktiviert ist, mit welcher ein gleichzeitiger Antrieb des ersten Motors mit einer ersten Winkelgeschwindigkeit und des zweiten Motors mit einer zweiten Winkelgeschwindigkeit bewirkt wird, wobei die erste und die zweite Winkelgeschwindigkeit in einem vorgegebenen Verhältnis stehen. Bei der vorgeschlagenen Drehmaschine wird ein "Gewindeschneidmodus" also durch eine elektrische Kopplung des ersten Motors und des zweiten Motors realisiert. Die bei konventionellen Drehmaschinen üblicherweise insoweit vorgesehene mechanische Kopplung zwischen dem ersten Motor und einer Leitspindel entfällt.

Die Schaltglocke kann in einer dritten Schwenkebene von einer dritten Neutralstellung in eine +X-Planschlitten-Vorschubstellung oder in eine -X-Planschlitten-Vorschubstellung schwenkbar sein. Die zweite Gewindespindel ist zweckmäßigerweise in der +X-Planschlitten-Vorschubstellung über eine zweite kinematische Kette mechanisch mit dem zweiten Motor gekoppelt und das erste Schaltelement ist geschaltet. Ferner kann die zweite Gewindespindel in der -X-Planschlitten-Vorschubstellung über die zweite kinematische Kette mechanisch mit dem zweiten Motor gekoppelt und das zweite Schaltelement geschaltet sein. Der vorgeschlagene Aufbau des Getriebes ist relativ einfach. Das erste und das zweite Schaltelement können sowohl zur Steuerung der Bewegung des Hauptschlittens als auch des Planschlittens verwendet werden.

Nach einer weiteren Ausgestaltung ist im Schalthebel eine mit einem Druckknopf verschiebbare Schaltstange zur Betätigung eines vierten Schaltelements angebracht, mit dem in den jeweiligen Vorschubstellungen eine dritte Steuerung aktivierbar ist, so dass ein Vorschub in einem Eilgangmodus bewirkt wird. Der vierte Schaltelement kann als Taster ausgebildet sein. Die vorgeschlagene Schaltung, welche vorzugsweise einen einzigen Schalthebel aufweist, ermöglicht ein Schalten einer Vielzahl von Funktionen. Das erleichtert die Handhabung der vorgeschlagenen Drehmaschine erheblich.

Vorteilhafterweise weist der Schalthebel eine in einer Neutralstellung sperrende Betätigungssperre auf, so dass der Schalthebel erst nach Lösen der Betätigungssperre schwenkbar ist. Damit kann sicher und zuverlässig ein unbeabsichtigtes Verschwenken des Schalthebels vermieden werden.

Nach einer weiteren Ausgestaltung ist die erste Gewindespindel eine Kugelgewindespindel und die erste Mutter eine dazu korrespondierende Kugelgewindemutter. Die zweite Gewindespindel ist vorteilhafterweise eine Trapezgewindespindel und die zweite Mutter eine dazu korrespondierende Trapezgewindemutter. In dieser Ausgestaltung ist der Planschlitten vorteilhafterweise selbsthemmend angetrieben. Damit kann eine Präzision der Bewegung des Planschlittens insbesondere beim Schneidvorgang verbessert werden.

Das erste Handrad ist zweckmäßigerweise mechanisch mit dem Hauptschlitten über eine dritte kinematische Kette und/oder das zweite Handrad ist mechanisch mit dem Planschlitten über eine vierte kinematische Kette gekoppelt oder koppelbar. Die Kopplung der dritten und/oder der vierten kinematischen Kette kann erfolgen, indem der Schalthebel in eine der Neutralstellungen geschaltet wird.

Nachfolgend wird ein Ausführungsbeispiel der Erfindung anhand der Zeichnungen näher erläutert. Es zeigen:
- Fig. 1: eine Schnittansicht durch einen Getriebekasten senkrecht zur ersten Gewindespindel,

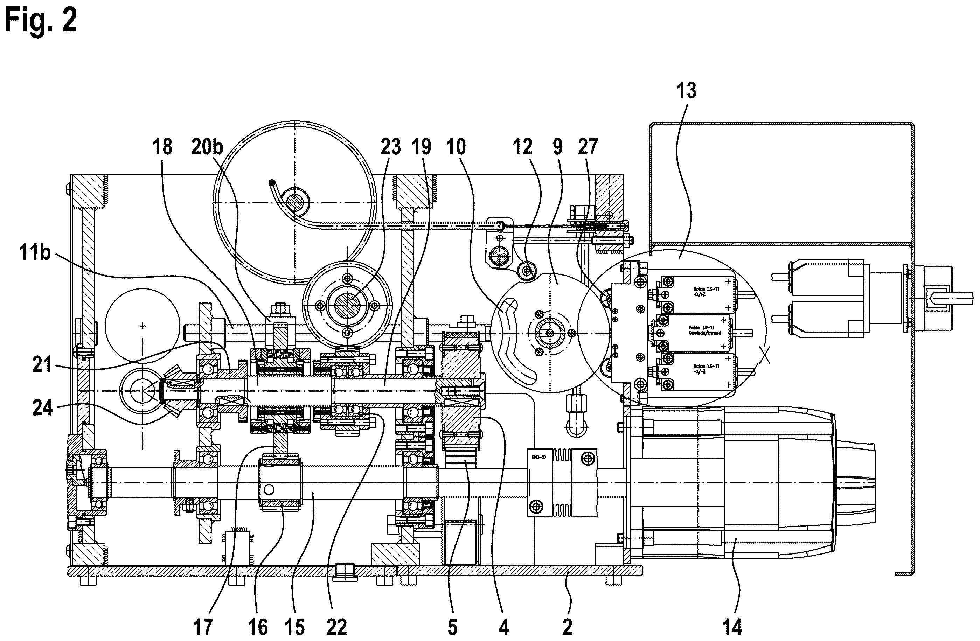

- Fig. 2: eine Schnittansicht durch den Getriebekasten parallel zur Z-Richtung (XY-Ebene),
- Fig. 3: eine zweite Schnittansicht durch den Getriebekasten parallel zur Z-Richtung (XZ-Ebene),
- Fig. 4: eine Schnittansicht durch die erste Gewindespindel sowie die erste Mutter,
- Fig. 5: eine Detailansicht gemäß Fig. 2 und
- Fig. 6: eine Schnittansicht durch den Schalthebel mit Schaltglocke, und
- Fig. 7: eine perspektivische Ansicht der Schaltstellungen des Schalthebels.

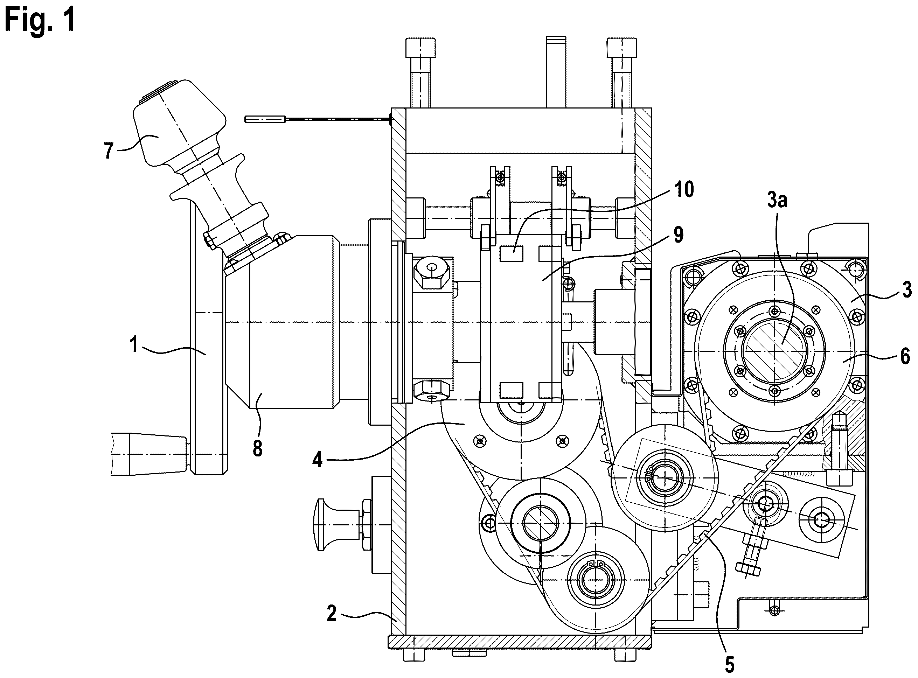

Die Figuren zeigen die wesentlichen Bestandteile eines Getriebes der vorgeschlagenen konventionellen Drehmaschine. Eine solche konventionelle Drehmaschine umfasst in herkömmlicher Weise eine (hier nicht gezeigte) Hauptspindel, welche mit einem (hier nicht gezeigten) ersten Motor antreibbar ist. Auf einem Maschinenbett (hier nicht gezeigt) ist in herkömmlicher Weise ein Hauptschlitten in einer Z-Richtung mittels eines ersten Handrads 1 (siehe Fig. 1) manuell verfahrbar. Auf dem (hier nicht gezeigten) Hauptschlitten ist in einer senkrecht zur Z-Richtung verlaufenden X-Richtung mittels eines zweiten Handrads (nicht gezeigt) manuell ein Planschlitten verfahrbar.

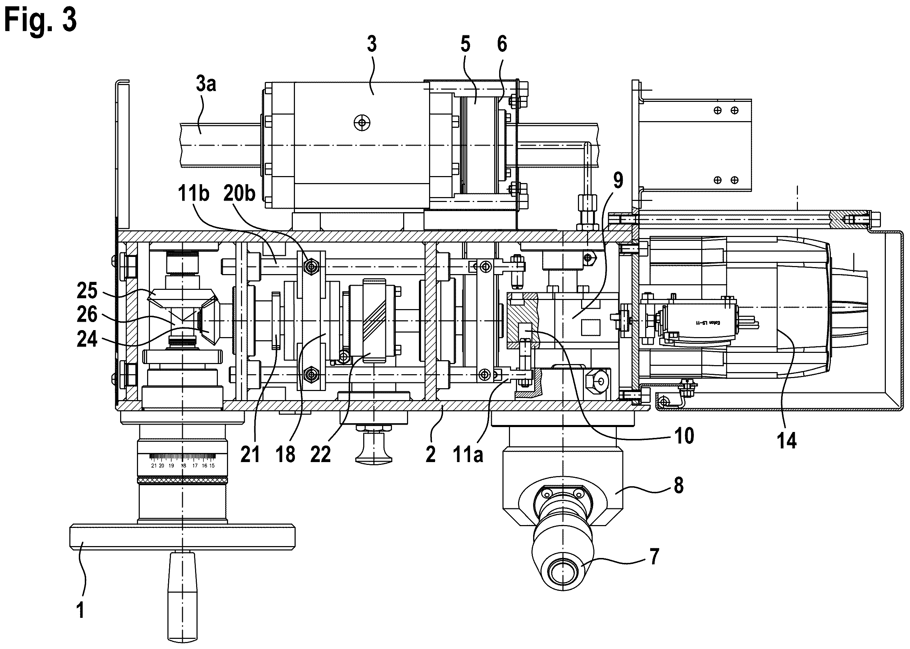

In Fig. 1 ist ferner der mit dem Bezugszeichen 7 bezeichnete Schalthebel erkennbar, welcher an einer Schaltglocke 8 fest angebracht ist. Die Schaltglocke 8 ist verbunden mit einer Schalttrommel 9, welche sich im Inneren des Getriebekastens 2 befindet. Die Schalttrommel 9 weist eine Kulisse 10 auf, welche je nach Schaltstellung des Schalthebels 7 im Eingriff mit verschiebbaren Schaltstangen 11a, 11b (siehe Fig. 3) ist. Ferner weist die Schalttrommel 9 an ihrem Umfang Ausnehmungen 12 auf, welche je nach Schaltstellung des Schalthebels 7 mit am Umfang über Rollen 27 anliegende Schaltelemente 13 zum Schalten der Schaltelemente 13 wechselwirken. Die Ausnehmungen bilden eine weitere Kulisse.

Im Getriebekasten 2, welcher am (hier nicht gezeigten) Hauptschlitten angebracht ist, befindet sich ein zweiter Motor 14, der eine Getriebeeingangswelle 15 antreibt. Auf der Getriebeeingangswelle 15 ist ein erstes Festrad 16 aufgenommen, welches in ein erstes Zahnrad 17 eingreift. Das erste Zahnrad 17 ist auf einer Schiebemuffe 18 aufgenommen, welche axial verschiebbar auf einer Getriebeausgangswelle 19 geführt ist. Die Schiebemuffe 18 kann durch Verschieben der Schaltstangen 11a, 11b mit daran angebrachten Schaltgabeln 20a, 20b entweder in Eingriff mit einem ersten Schaltrad 21 oder in Eingriff mit einem zweiten Schaltrad 22 gebracht werden.

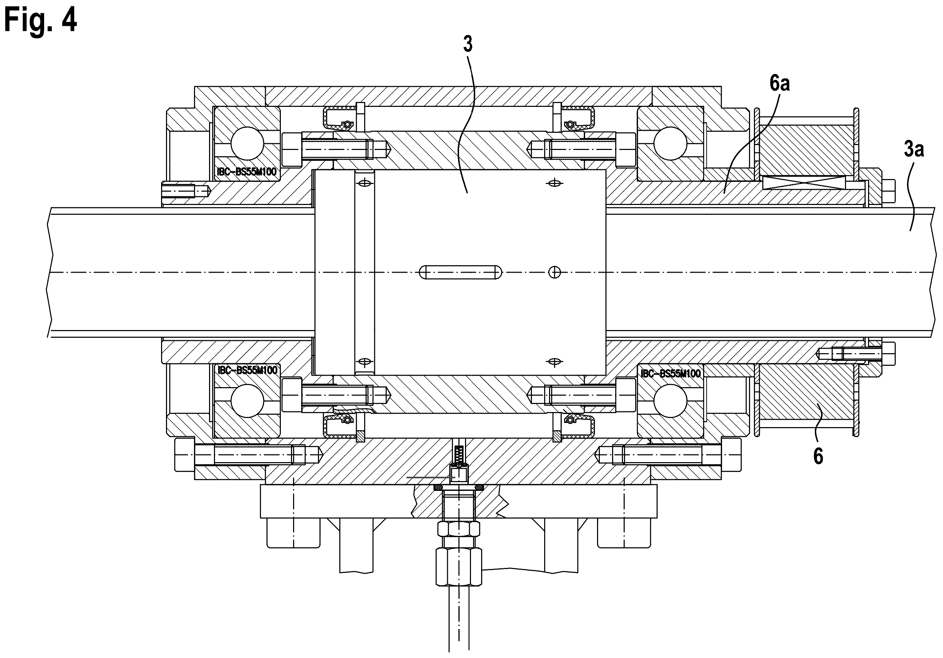

Das erste Schaltrad 21 ist über die Getriebeausgangswelle 19 fest verbunden mit einer ersten Riemenscheibe 4, welche über einen Zahnriemen 5 eine zweite Riemenscheibe 6 antreibt, siehe Fig. 1. Die zweite Riemenscheibe 6 treibt über eine Hohlwelle 6a eine erste Spindelmutter 3 an, welche drehbar bezüglich einer feststehenden ersten Gewindespindel 3a ist (siehe Fig. 4). Die erste Gewindespindel ist fest am Maschinenbett (hier nicht gezeigt) angebracht und erstreckt sich in z-Richtung. - Das zweite Schaltrad 22 treibt über eine zweite kinematische Kette, umfassend ein Schraubrad-Getriebe 23 und weitere (hier nicht gezeigte) Zwischenräder, eine zweite Gewindespindel (hier nicht gezeigt)an.

Am einen Ende der Getriebeausgangswelle 19 ist ein erstes Kegelrad 24 fest angebracht, welches im Eingriff mit einem zweiten Kegelrad 25 ist. Das zweite Kegelrad 25 ist auf einer Handradwelle 26 aufgenommen, welche mittels des ersten Handrads 1 drehbar ist.

Die Fig. 4 zeigt im Detail nochmals den Aufbau der ersten Spindelmutter 3.

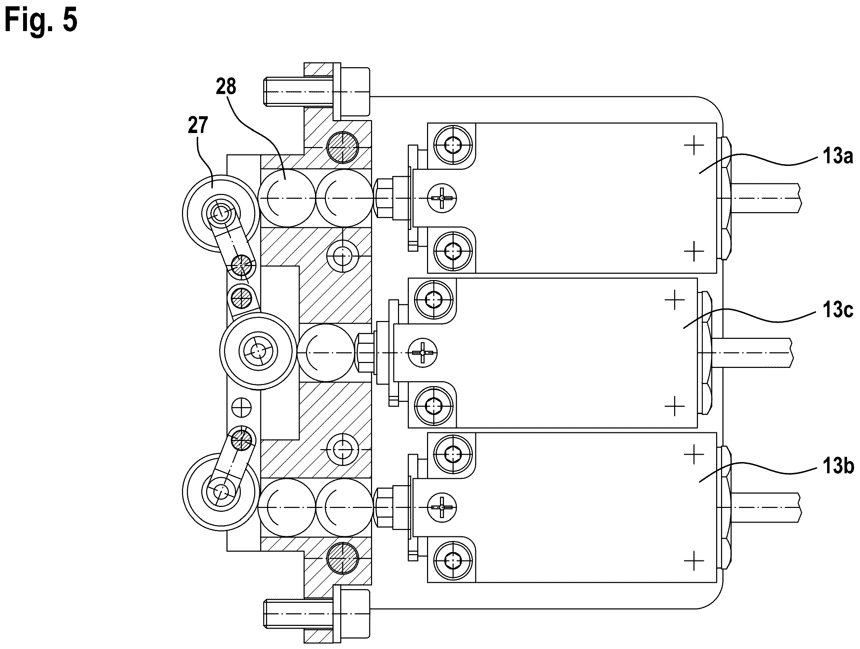

Fig. 5 zeigt im Detail die Schaltelemente 13. Ein erstes Schaltelement 13a dient dem Schalten des zweiten Motors 14 in eine +Richtung. Ein zweites Schaltelement 13b dient dem Schalten des zweiten Motors 14 in eine entgegengesetzte - Richtung. Ein drittes Schaltelement 13c dient der wahlweisen Aktivierung einer Steuerung (hier nicht gezeigt) für einen "Gewindeschneidmodus". Im Gewindeschneidmodus werden der erste Motor und der zweite Motor 14 in einem fest vorgegebenen Drehzahlverhältnis angetrieben. Das Schalten der Schaltelemente 13a, 13b und 13c erfolgt über schwenkbar gehaltene Rollen 27, welche über in Bohrung geführte Kugeln 28 mit den Schaltelementen 13a, 13b und 13c wechselwirken.

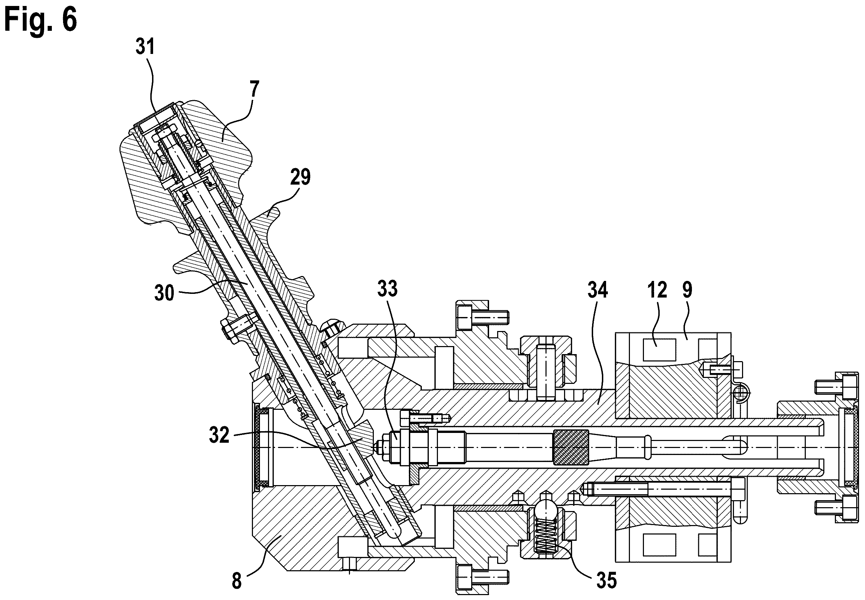

Fig. 6 zeigt im Detail den Aufbau der Schalteinheit. Am Schalthebel 7 ist axial verschiebbar eine Verriegelungsmuffe 29 angebracht. Innerhalb des Schalthebels 7 ist axial verschiebbar ein Stößel 30 angebracht, welcher mit einem Druckknopf 31 verschiebbar ist. An dem Stößel 30 ist eine Nocke 32 vorgesehen, mit der ein viertes Schaltelement 33 schaltbar ist. Die Schaltglocke 8 ist fest verbunden mit einer Schaltwelle 34. Die Schaltwelle 34 ist axial bewegbar. Mit dem Bezugszeichen 35 ist ein Rastelement bezeichnet, mit dem eine axiale Stellung der Schaltwelle 34 in mehreren Schaltebenen verrastbar ist.

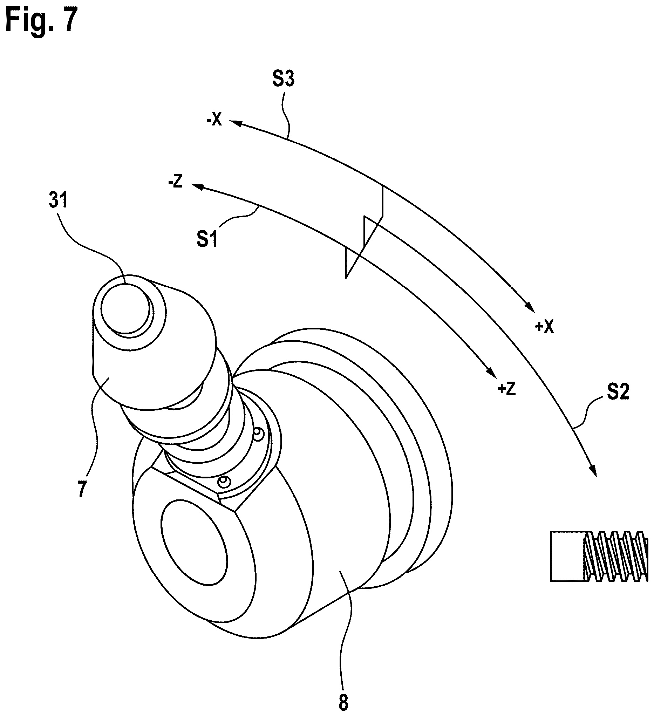

Fig. 7 zeigt in einer perspektivischen Ansicht die Funktionen, welche mit dem Schalthebel 7 schaltbar sind. Zunächst muss der Schalthebel 7 durch Ziehen der Verriegelungsmuffe 29 in Richtung des Druckknopfs 31 entriegelt werden. Ein Schalten "-Z - neutral - +Z" erfolgt in einer ersten Schaltebene S1. Beim Verschwenken des Schalthebels 7 in die +Z-Richtung wird durch eine Drehbewegung der Schalttrommel 9 das erste Schaltelement 13a geschalten. Der zweite Motor 14 wird in eine +Richtung gedreht. Zuvor oder gleichzeitig wird mittels der ersten Schaltgabel 20a die Schiebemuffe 18 so bewegt, dass deren Innenverzahnung in Eingriff mit dem ersten Schaltrad 21 ist. Ein vom Festrad 16 übertragenes Drehmoment wird über das erste Schaltrad 21 auf die Getriebeausgangswelle 19 und die daran fest angebrachte erste Riemenscheibe 4 übertragen. Mittels der ersten Riemenscheibe 4 werden über den Zahnriemen 5 die zweite Riemenscheibe 6 sowie die erste Spindelmutter 3 angetrieben, so dass der Getriebekasten 2 mit dem (hier nicht gezeigten) Hauptschlitten in +Z-Richtung angetrieben wird.

Beim Verschwenken des Schalthebels 7 nach -Z wird durch Schalten des zweiten Schaltelements 13b der zweite Motor 14 in -Drehrichtung versetzt. Es erfolgt über dieselbe kinematische Kette ein Antrieb des Hauptschlittens in -Z-Richtung.

Durch Druck auf die Schaltglocke 8 kann der Schalthebel 7 mit der daran angebrachten Schalttrommel 9 in eine zweite Schaltebene S2 verschoben werden. In der zweiten Schaltebene S2 kann der Schalthebel 7 lediglich nach rechts zur Aktivierung eines Gewindeschneidmodus bewegt werden. In diesem Fall wird das dritte Schaltelement 13c geschalten.

Die Schaltglocke 8 kann mit der Schalttrommel 9 axial weiter in eine dritte Schaltebene S3 bewegt werden. In der dritten Schaltebene S3 wird mittels der zweiten Schaltgabel 20b die Schiebemuffe 18 in Eingriff mit dem zweiten Schaltrad 22 gebracht. Infolgedessen wird das Drehmoment des Festrads 16 auf das zweite Schaltrad 22 und von dort über die zweite kinematische Kette, umfassend das Schraubrad-Getriebe 23 und weitere Zwischenräder (hier nicht gezeigt), auf die zweite Gewindespindel (hier nicht gezeigt) übertragen. Die zweite Gewindespindel ist im Eingriff mit einer fest mit einem Planschlitten (hier nicht gezeigt) verbundenen zweiten Spindelmutter bzw. einem Spindelgewinde (hier nicht gezeigt). Infolgedessen bewirkt eine Drehung der zweiten Gewindespindel eine Bewegung des Planschlittens relativ zum Getriebekasten 2 bzw. dem Hauptschlitten.

Zur Erzeugung der jeweiligen Drehbewegungen des zweiten Motors 14 werden auch bei dem Schalten -X/+X die ersten bzw. zweiten Schaltelemente 13a, 13b geschaltet.

In den Schaltstellungen -Z, +Z, -X und +X kann zusätzlich der am Schalthebel 7 vorgesehene Druckknopf 31 gedrückt werden. In diesem Fall wird das vierte Schaltelement 33 geschalten. Bei Schalten des vierten Schaltelements 33 wird die Drehzahl des zweiten Motors 14 auf einen vorgegebenen Wert erhöht. So kann ein "Eilgangmodus" aktiviert werden.

Die nachfolgende Tabelle zeigt nochmals zusammenfassend die mit dem Schalthebel 7 schaltbaren Funktionen.

| **Schaltglocke außen (S1)** | **Schalthebel 30°nach links geschwenkt** | **Schalthebel mittig** | **Schalthebel 30°nach rechts geschwenkt** |
|---|---|---|---|
| Funktion | Hauptschlitten Vorschub in -Z Richtung | Hauptschlitten Stopp | Hauptschlitten Vorschub in +Z Richtung |
| Getriebe | erste kinematische Kette mit zweitem Motor | | erste kinematische Kette mit zweitem Motor |
| | | | |
| elektrische Schaltelemente | Schaltelement 13b betätigt: | | Schaltelement 13a betätigt: |
| | Zweiter Motor läuft in -Z-Richtung im Langsamlauf. | | Zweiter Motorotor läuft in +Z-Richtung im Langsamlauf. |
| | Falls Schaltelemente 13b + 33 betätigt: | | |
| | | | Falls Schaltelemente 13a + 33 betätigt: |
| | Zweiter Motor läuft in -Z Richtung im Schnelllauf. | | |
| | | | Zweiter Motor läuft in + Z Richtung im Schnelllauf. |

| **Schaltglocke Mitte (S2)** | **Schalthebel nach links schwenken nicht möglich** | **Schalthebel mittig** | **Schalthebel 60°nach rechts geschwenkt** |
|---|---|---|---|
| Funktion | | Hauptschlitten Stopp | Gewindeschneiden: Hauptschlittenantrieb ist mit Hauptspindel synchronisiert, Hauptschlitten fährt je nach Laufrichtung der Hauptspindel und gewählter Steigungsrichtung in +Z bzw. -Z Richtung |
| Getriebe | | | Erste kinematische Kette mit zweitem Motor |
| elektrische Schaltelemente | | | Schaltelement 13c betätigt: |
| | | | Zweiter Motor ist mit erstem Motor synchronisiert |
| | | | |

| **Schaltglocke innen (S3)** | **Schalthebel 30°nach links geschwenkt** | **Schalthebel mittig** | **Schalthebel 30°nach rechts geschwenkt** |
|---|---|---|---|
| Funktion | Planschlitten Vorschub in - X Richtung | Planschlitten Stopp | Planschlitten Vorschub in +X Richtung |
| Getriebe | Zweite kinematische Kette mit zweitem Motor | | Zweite kinematische Kette mit zweitem Motor |
| elektrische Schaltelemente | Schaltelement 13b betätigt: | | Schaltelement 13a betätigt: |
| | Zweiter Motor läuft im Vorwärtsgang | | Zweiter Motor läuft im Rückwärtsgang |
| | Falls Schaltelement 13b + 33 betätigt: | | Falls Schaltelement 13a + 33 betätigt: |
| | Zweiter Motor läuft in -X Richtung im Schnelllauf | | Zweiter Motor läuft in -X Richtung im Schnelllauf |

Die vorgeschlagene Drehmaschine lässt sich besonders einfach handhaben. Es können mit einem einzigen Schalthebel 7 insgesamt neun Funktionen geschalten werden, ohne dass ein weiteres Schaltelement bedient werden muss. Wegen des Vorsehens einer feststehenden ersten Gewindespindel 3a kann auf eine Zahnstange sowie eine Leit- und Zugspindel verzichtet werden. Ferner können auf Schaltelemente sowie ein Getriebe zum Antrieb der Leit- und Zugspindel verzichtet werden.

### Bezugszeichenliste

- 1: erstes Handrad
- 2: Getriebekasten
- 3: erste Spindelmutter
- 3a: erste Gewindespindel
- 4: erste Riemenscheibe
- 5: Zahnriemen
- 6: zweite Riemenscheibe
- 6a: Hohlwelle
- 7: Schalthebel
- 8: Schaltglocke
- 9: Schalttrommel
- 10: Kulisse
- 11a, b: Schaltstangen
- 12: Ausnehmungen
- 13: Schaltelemente
- 13a, b, c: erstes, zweites, drittes Schaltelement
- 14: zweiter Motor
- 15: Getriebeeingangswelle
- 16: Festrad
- 17: erstes Zahnrad
- 18: Schiebemuffe
- 19: Getriebeausgangswelle
- 20a, b: erste, zweite Schaltgabel
- 21: erstes Schaltrad
- 22: zweites Schaltrad
- 23: Schraubradgetriebe
- 24: erstes Kegelrad
- 25: zweites Kegelrad
- 26: Handradwelle
- 27: Rollen
- 28: Kugeln
- 29: Verriegelungsmuffe
- 30: Stößel
- 31: Druckknopf
- 32: Nocke
- 33: viertes Schaltelement
- 34: Schaltwelle
- 35: Rastelement

- S1: erste Schaltebene
- S2: zweite Schaltebene
- S3: dritte Schaltebene

## Patentansprüche

1. Drehmaschine mit einer Hauptspindel und einem ersten Motor zum Antrieb der Hauptspindel,
einem Maschinenbett, auf dem ein Hauptschlitten in einer Z-Richtung mittels eines ersten Handrads (1) manuell verfahrbar ist,
einem auf dem Hauptschlitten angebrachten Planschlitten, welcher in einer senkrecht zur Z-Richtung verlaufenden X-Richtung mittels eines zweiten Handrads manuell verfahrbar ist,
**gekennzeichnet durch**
einen am Hauptschlitten angebrachten Getriebekasten (2) mit einem zweiten Motor (14) zum wahlweisen Antrieb (i) einer im Getriebekasten (2) drehbar gelagerten ersten Mutter (3), welche im Eingriff mit einer fest mit dem Maschinenbett verbundenen ersten Gewindespindel (3a) ist, oder (ii) einer zweiten Gewindespindel (23), welche im Eingriff mit einer am Planschlitten fest angebrachten zweiten Mutter ist,
wobei im Getriebekasten (2) ein elektro-mechanisches Schaltgetriebe vorgesehen ist, welches mit einem Schalthebel (7) derart schaltbar ist, dass wahlweise der Haupt- oder der Planschlitten mittels des zweiten Motors (14) motorisch in eine +Richtung oder in eine entgegengesetzte -Richtung verfahrbar ist.

2. Drehmaschine nach Anspruch 1, wobei im Getriebekasten (2) mehrere elektrische Schaltelemente (13, 13a, 13b, 13c, 33) aufgenommen sind, welche mit einer mit dem Schalthebel (7) bewegbaren Schaltkulisse (12) und/oder mittels einer im Schalthebel (7) vorgesehenen Schaltstange (30) betätigbar sind.

3. Drehmaschine nach einem der vorhergehenden Ansprüche, wobei Schaltelemente (13a, 13b) zum Einschalten des zweiten Motors mit einer vorgegebenen Drehrichtung vorgesehen sind, wobei vorzugsweise durch eine gleichzeitige Betätigung mehrerer der Schaltelemente (13a, 13b, 33) eine Winkelgeschwindigkeit des zweiten Motors (14) auf einen vorgegebenen Wert erhöhbar ist.

4. Drehmaschine nach einem der vorhergehenden Ansprüche, wobei der Schalthebel (7) an einer um eine Schwenkachse schwenkbaren Schaltglocke (8) angebracht ist, welche ausschließlich in einer Neutralstellung parallel zur Schwenkachse in zumindest drei Schwenkebenen (S1, S2, S3) verstellbar ist, wobei die Schaltglocke (8) vorzugsweise in einer ersten Schwenkebene (S1) von einer ersten Neutralstellung in eine +Z-Hauptschlitten-Vorschubstellung oder in eine -Z-Hauptschlitten-Vorschubstellung schwenkbar ist.

5. Drehmaschine nach einem der vorhergehenden Ansprüche, wobei die erste Mutter (3) in der +Z-Hauptschlitten-Vorschubstellung über eine erste kinematische Kette mechanisch mit dem zweiten Motor (14) gekoppelt und ein erstes Schaltelement (13a) geschaltet ist.

6. Drehmaschine nach einem der vorhergehenden Ansprüche, wobei beim Schalten des ersten Schaltelements (13a) eine erste Steuerung derart aktiviert wird, dass ein Antrieb des zweiten Motors (14) in einer ersten Drehrichtung bewirkt wird.

7. Drehmaschine nach einem der vorhergehenden Ansprüche, wobei die erste Mutter (3) in der -Z-Hauptschlitten-Vorschubstellung über die erste kinematische Kette mechanisch mit dem zweiten Motor (14) gekoppelt und ein zweites Schaltelement (13b) geschaltet ist.

8. Drehmaschine nach einem der vorhergehenden Ansprüche, wobei beim Schalten des zweiten Schaltelements (13b) die erste Steuerung derart aktiviert wird, dass ein Antrieb des zweiten Motors (14) in einer der ersten Drehrichtung entgegengesetzte zweite Drehrichtung bewirkt wird.

9. Drehmaschine nach einem der vorhergehenden Ansprüche, wobei die Schaltglocke (8) in einer zweiten Schwenkebene (S2) von einer zweiten Neutralstellung in eine Hauptschlitten-Gewindeschneidstellung schwenkbar ist.

10. Drehmaschine nach einem der vorhergehenden Ansprüche, wobei die erste Mutter (3) in der Hauptschlitten-Gewindeschneidstellung über die erste kinematische Kette mechanisch mit dem zweiten Motor (14) gekoppelt und ein drittes Schaltelement (13c) geschaltet ist, so dass eine zweite Steuerung aktiviert ist, mit welcher ein gleichzeitiger Antrieb des ersten Motors mit einer ersten Winkelgeschwindigkeit und des zweiten Motors (14) mit einer zweiten Winkelgeschwindigkeit bewirkt wird, wobei die erste und die zweite Winkelgeschwindigkeit in einem vorgegebenen Verhältnis stehen.

11. Drehmaschine nach einem der vorhergehenden Ansprüche, wobei die Schaltglocke (8) in einer dritten Schwenkebene (S3) von einer dritten Neutralstellung in eine +X-Planschlitten-Vorschub- oder in eine -X-Planschlitten-Vorschubstellung schwenkbar ist.

12. Drehmaschine nach einem der vorhergehenden Ansprüche, wobei die zweite Mutter in der +X-Planschlitten-Vorschubstellung über eine zweite kinematische Kette mechanisch mit dem zweiten Motor (14) gekoppelt und das erste Schaltelement (13a) geschaltet ist.

13. Drehmaschine nach einem der vorhergehenden Ansprüche, wobei die zweite Mutter in der -X-Planschlitten-Vorschubstellung über die zweite kinematische Kette mechanisch mit dem zweiten Motor (14) gekoppelt und das zweite Schaltelement (13b) geschaltet ist.

14. Drehmaschine nach einem der vorhergehenden Ansprüche, wobei im Schalthebel (7) eine mit einem Druckknopf (31) verschiebbare Schaltstange (30) zur Betätigung eines vierten, vorzugsweise als Taster ausgebildeten, Schaltelements (33) angebracht ist, mit dem in den jeweiligen Vorschubstellungen eine dritte Steuerung aktivierbar ist, so dass ein Vorschub in einem Eilgangmodus bewirkt wird.

15. Drehmaschine nach einem der vorhergehenden Ansprüche, wobei der Schalthebel (7) eine in einer Neutralstellung sperrende Betätigungssperre (29) aufweist, so dass der Schalthebel (7) erst nach Lösen der Betätigungssperre (29) schwenkbar ist.

16. Drehmaschine nach einem der vorhergehenden Ansprüche, wobei die erste Gewindespindel (3a) eine Kugelgewindespindel und die erste Mutter eine dazu korrespondierende Kugelgewindemutter ist, und/oder dass die zweite Gewindespindel (23) eine Trapezgewindespindel und die zweite Mutter eine dazu korrespondierende Trapezgewindemutter ist.

17. Drehmaschine nach einem der vorhergehenden Ansprüche, wobei das erste Handrad (1) mechanisch mit dem Hauptschlitten über eine dritte kinematische Kette und/oder das zweite Handrad mechanisch mit dem Planschlitten über eine vierte kinematische Kette gekoppelt oder koppelbar ist/sind.
